# EUROPEAN PATENT SPECIFICATION

(11) **EP 2 094 746 B1**
(45) Date of publication and mention of the grant of the patent: **01.02.2012**
(21) Application number: 06835399.4
(22) Date of filing: 26.12.2006
(51) Int. Cl.: C08F 212/10, C08F 212/08, C08F 220/18, C08L 25/08, C08L 33/08

(54) **THERMOPLASTIC RESIN HAVING UNIFORM COMPOSITION AND NARROW MOLECULAR WEIGHT DISTRIBUTION, AND METHOD FOR PREPARING THE SAME**
THERMOPLASTISCHES HARZ MIT EINHEITLICHER ZUSAMMENSETZUNG UND ENGER MOLEKULARGEWICHTSVERTEILUNG UND HERSTELLUNGSVERFAHREN DAFÜR
RÉSINE THERMOPLASTIQUE AYANT UNE COMPOSITION UNIFORME ET UNE DISTRIBUTION ÉTROITE DES MASSES MOLÉCULAIRES, ET SON PROCÉDÉ DE FABRICATION

(30) Priority: 10.11.2006 KR 20060110994
(43) Date of publication of application: 02.09.2009
(73) Proprietor: Cheil Industries Inc., Gumi-si Gyeongsangbuk-do 730-030 (KR)
(72) Inventor: JIN, Young Sub, Seoul 153-766 (KR); LEE, Byeong Do, Gwangjugwangyeok-si 502-260 (KR); HONG, Jae Keun, Gunpo-si Gyeonggi-do, 435-010 (KR); PARK, Hwan Seok, Anyang-si Gyeonggi-do 431-050 (KR)
(74) Representative: Bublak, Wolfgang
(86) International application number: PCT/KR2006/005695
(87) International publication number: WO 2008/056849

(56) References cited:
- WO-A1-2005/097905
- KR-A- 20050 030 262
- US-A- 5 466 722
- US-A- 5 973 079
- US-A- 2003 013 815
- US-A1- 2006 142 487

## Description

### Technical Field

The present invention relates to a method of preparing a thermoplastic resin having uniform composition and narrow molecular weight distribution. More particularly, the present invention relates to a method of preparing a thermoplastic resin having uniform composition and narrow molecular weight distribution by employing a continuous polymerization process for a matrix resin in a transparent ABS resin and a transparent ABS resin composition using the thermoplastic resin as a matrix resin.

### Background Art

In general, ABS(acrylonitrile-Butadiene-Styrene) resin has well-balanced properties such as processability, toughness, chemical resistance and impact resistance due to the composing materials of styrene, acrylonitrile and butadiene, and is excellent in appearance. Therefore, ABS resins have been widely used in automobile, electric appliances, office supplies, electronic goods, toys, stationery and so on. However, ABS resins have limited use in applications in which transparency is required since ABS resins are typically opaque. So, other transparent resins such as SAN (Styrene-Acrylonitrile), PC (Polycarbonate), PS (Polystyrene), PMMA (Polymethyl methacrylate) and the like, have been mainly employed when transparency is needed.

However, although SAN, PS and PMMA resins are superior in transparency and cost, they have poor impact resistance, which restricts their application fields. In the case of polycarbonate, it has low chemical resistance and high cost, thereby limiting applications, although transparency and impact resistance are superior. Therefore, transparent ABS resins have been under development to satisfy both transparency and impact resistance by providing ABS resins with transparency.

It is known to make ABS resin transparent by minimizing the diffusion of the light in the visible wavelength region by adjusting the size of the rubber particles employed in ABS resin. Another known method is matching the refractive indices between the dispersed phase (rubber) and the continuous phase (matrix resin) to minimize the diffusion and refraction of the light at the interface between the dispersed phase and the continuous phase.

Korea Patent Nos. 0429062, 0507336, 0519116, Korea Patent Laid-open No. 2006-016853, U.S. patent No. 4,767,833, U.S. Patent Publication No. 2006/0041062, and Japanese Patent Laid-open No. 2006-63127 disclose transparent ABS resins prepared by adjusting the refractive index differences between the dispersed phase and the matrix resin not more than 0.005. However, the compositions of polymer produced from the initial polymerization stage may be different from those from the last polymerization stage, because the matrix resins prepared from the above patents have a conversion of 95 % or more, and the reactivities of monomer to polymerize are different from each other.

G. Odian (Principles of Polymerization, 4th ed., John wiley & Sons, 2004) and M. Hocking (J. of Polymer Science: Part A, vol. 34, pp. 2481-2497, 1996) proposed equations estimating the compositions of polymer prepared by radical polymerization using monomer mixtures comprising at least three monomers. Those equations which can estimate the polymer compositions by using the reactivity ratios of each monomer in the monomer mixture demonstrates that the monomer composition cannot be the same as the polymer composition except an azeotropic composition. That is, the monomer having a fast reaction rate is rapidly converted into the polymer, so that the polymer from the monomer having a fast reaction rate will mainly exist at the initial polymerization stage. On the other hand, as the polymerization proceeds to the later stage, the polymer from monomer having a slow reaction rate will mainly exist. When the conversion reaches to 95 % or more, most monomers added thereto are converted into a polymer and the average composition of the polymer is similar to the monomer compositions. However, it is estimated that the polymers may have different compositions depending on the stage at which the polymer is produced. Therefore, although the average refractive index of the matrix resin from the above patents may be matched with that of the dispersed phase (rubber), the refractive index of the matrix is partially different from that of the rubber, which tends to adversely affect the transparency.

Patent document US 2006/0142487 A1 discloses a process for the production of a transparent rubber-modified monovinylidene aromatic resin. The rubber-modified monovinylidene aromatic resin comprises a dispersed rubber particle and a continuous phase matrix copolymer. Said process is performed by polymerising the monovinylidene aromatic monomers, ester of (meth)acrylic acid monomers and optionally copolymerisable monomers with presence of the rubbery copolymer, the final conversion of polymerisation being 60-98%.

Patent document EP 1 734 078 A1 discloses a thermoplastic resin composition comprising among others styrenic resins. Styrenic resin encompasses a rubber-reinforced resin and/or a copolymer wherein the copolymer can be obtained by polymerising a vinyl monomer comprising an aromatic vinyl compound and optionally another vinyl monomer copolymerisable with the aromatic compound.

In the prior art, many methods have been proposed to improve impact strength of transparent ABS resin by using rubber particles obtained from various techniques. However, no technique for improving impact resistance which is dependent on the property of the matrix resin has been found. The molecular weight distribution of the matrix resin obtained from the above technology is typically more than 2.3, and as the molecular weight distribution becomes broader, the impact strength deteriorates due to a low molecular weight polymer.

Accordingly, the present inventors have developed a method of preparing a thermoplastic resin having uniform composition and narrow molecular weight distribution, and a transparent ABS resin having improved transparency and impact strength by using the foregoing thermoplastic resin as a matrix resin.

### Disclosure of Invention

### Technical Problem

An object of the present invention is to provide a method of preparing a thermoplastic resin having uniform composition and narrow molecular weight distribution, which is thereby suitable for a matrix resin in a transparent ABS resin.

Another object of the present invention is to provide a transparent ABS resin having good transparency and high impact resistance by using the thermoplastic resin prepared by the method of the present invention.

Other objects and advantages of this invention will be apparent from the ensuing disclosure and appended claims.

### Technical Solution

One aspect of the invention provides a method for preparing a thermoplastic resin, which comprises continuously polymerizing a mixed raw material comprising a (meth)acrylic acid alkylester, an aromatic vinyl monomer and a unsaturated nitrile monomer in series reactors while controlling the conversion of each reactor to be about 40 % or less.

In exemplary embodiments of the invention, the number of series reactors comprises about 2∼6 reactors.

In exemplary embodiments of the invention, the conversion of each reactor is controlled through a reaction temperature, a residence time, and the kinds and amounts of initiator.

According the invention, a monomer selected from the group consisting of (meth)acrylic acid alkylester, aromatic vinyl monomer, unsaturated nitrile monomer and mixtures thereof is further added between each reactor.

In exemplary embodiments of the invention, the mixed raw material comprises up to about 0.2 parts by weight of a polymerization initiator based on 100 parts by weight of a monomer mixture.

In exemplary embodiments of the invention, the mixed raw material comprises up to about 20 parts by weight of a solvent based on 100 parts by weight of a monomer mixture.

In exemplary embodiments of the invention, the thermoplastic resin has a weight average molecular weight of about 60,000 to 150,000, and a molecular weight distribution of about 2.3 or less.

Another aspect of the invention provides a transparent ABS resin composition which employs the foregoing thermoplastic resin as a matrix resin.

In exemplary embodiments of the invention, the transparent ABS resin composition comprises a rubber/methylmethacrylate-styrene-acrylonitrilegraft copolymer.

In exemplary embodiments of the invention, the refractive index difference between the rubber/methylmethacrylate-styrene-acrylonitrilegraft copolymer and the ther-moplastic resin is about 0∼0.002, preferably 0∼0.008.

### Best Mode for Carrying Out the Invention

A mixture of (meth)acrylic acid alkylester, aromatic vinyl compound and unsaturated nitrile compound is continuously fed into a reactor, and the mixture is maintained for a given residence time so as to polymerize the mixture, followed by continuous discharging the polymer produced.

At least two continuous polymerization reactors as mentioned above are connected in series and the monomer consumed preferentially in a large amount in the previous reactor caused by a difference in reaction rate is further added continuously between the reactors to participate in the polymerization reaction, which enables the polymer produced from each reactor to maintain a uniform composition.

It is preferable to have about 2∼6 continuous polymerization reactors connected in series.

Examples of the (meth)acrylic acid alkylester monomer may include methylmethacrylate, ethylmethacrylate, 2-ethylhexylmethacrylate, methylacrylate, ethylacrylate, butylacrylate, 2-ethylhexylacrylate, and so forth.

Examples of the aromatic vinyl compound may include styrene, α-methyl styrene, and so forth.

Examples of the unsaturated nitrile compound may include acrylonitrile, methacrylonitrile, and so forth.

The conversion of monomers into polymers in each continuous polymerization reactor is controlled to be 40 % or less. If the conversion is more than 40 %, the composition of the polymer produced from the initial polymerization stage may be different from the composition of polymer from the later polymerization stage, so that a minute refractive index difference may partially occur, even though the average refractive indices are the same, resulting in transparency deterioration of ABS resin. If the conversion is less than 15 %, it is not economical or desirable to increase the number of reactors or apparatuses involved between the reactors, although the polymer may have homogeneous composition. Therefore, it is preferable to control the conversion in each reactor to be about 15 %∼40 %.

Reaction temperature, residence time, and the kinds and amounts of polymerization initiator may be controlled in order to maintain the conversion of 40 % or less in each reactor. The methods for controlling reaction temperature, residence time, initiator amount or kind of polymerization initiator will be evident to those of ordinary skill in the art.

Examples of the polymerization initiator may include benzoyl peroxide, t-butyl peroxyisobutyrate, 1,1-bis(t-butylperoxy)cyclohexane, 2,2-bis(4,4-di-t-butylperoxy cyclohexane)propane, t-hexyl peroxy isopropyl monocarbonate, t-butyl peroxylaurate, t-butyl peroxy isopropyl monocarbonate, t-butyl peroxy 2-ethylhexyl monocarbonate, t-hexyl peroxybenzoate, t-butyl peroxyacetate, 2,2-bis(t-butyl peroxy)butane, t-butyl peroxybenzoate, dicumyl peroxide, 2,5-dimethyl-2,5-bis(t-butyl peroxy)hexane, t-butyl cumyl peroxide, di-t-butyl peroxide, di-t-amyl peroxide, and so forth. The amount of the polymerization initiator is about 0∼1 part by weight, preferably about 0.01∼0.2 parts by weight based on 100 parts by weight of a monomer mixture. If the amount of polymerization initiator is more than 1 part by weight, it is difficult to control reaction temperature or residence time due to a accelerated polymerization reaction, and the molecular weight of polymer obtained therefrom may be decreased so that the impact strength may be lowered.

In exemplary embodiments of the invention, a solvent may be optionally employed. The solvent may be used in an amount of about 20 parts by weight or less, per 100 parts by weight of the monomer mixture to decrease the viscosity of the reactant, thereby allowing it to be stirred effectiviely, which can be advantageous to obtain a thermoplastic resin with narrow molecular weight distribution. Examples of the solvent may include aromatic solvents such as ethylbenzene, benzene, toluene, xylene, etc; methyl ethyl ketone, acetone, and the like.

In the present invention, a molecular weight controlling agent can be added. Alkyl mercaptan represented by the formula of CH₃(CH₂)ₙ SH can be used as themolecular weight controlling agent. For example, n-butylmercaptan, n-octylmercaptan, n-dodecylmercaptan, t-dodecylmercaptan, and the like, may be used.

A thermoplastic resin prepared by the method of the present invention has a weight average molecular weight of about 60,000 to about 150,000, and a molecular weight distribution of about 2.3 or less. One of the features of the method for preparing the thermoplastic resin is that the same reaction conditions are maintained in each continuous reactor, and thus the molecular weight of polymers produced from each reactor is uniform.

Generally, the impact resistance of a transparent ABS resin is greatly affected by the kinds, sizes and shapes of rubber used therein. When the same rubber is employed, the impact resistance is affected by the molecular weight and the molecular weight distribution of the thermoplastic resin used as a matrix of the transparent ABS resin. If the weight average molecular weight of the thermoplastic resin is less than 60,000, the impact resistance may be lowered. If the weight average molecular weight of the thermoplastic resin is more than 150,000, the flowability may become too bad, resulting in decreased processability. Further, if the molecular weight distribution defined as the ratio of the weight average molecular weight to the number average molecular weight (Mw/Mn) is more than 2.3, a large amount of low molecular weight resins with the same weight average molecular weight may be produced, which results in poor impact resistance.

The composition of the final thermoplastic resin prepared by the foregoing continuous polymerization comprises about 50∼85 parts by weight of (meth)acrylic acid alkylester, about 10∼50 parts by weight of aromatic vinyl compound and about 2∼15 parts by weight of unsaturated nitrile compound.

The thermoplastic resin can be employed as a matrix resin in a transparent ABS resin composition.

In exemplary embodiments of the invention, the transparent ABS resin composition comprises the foregoing thermoplastic resin and a rubber/methylmethacryl atestyrene-acrylonitrile graft copolymer.

In exemplary embodiments of the invention, the transparent ABS resin composition may be prepared by blending the foregoing thermoplastic resin and the rubber/ methylmethacrylate-styrene-acrylonitiile graft copolymer. As for the rubber, conjugated diene rubber or SBR (Styrene-Butadiene Rubber) may be used.

In exemplary embodiments of the invention, the transparent ABS resin composition comprises about 50 to 90 % by weight of the foregoing thermoplastic resin and about 10 to 50 % by weight of the rubber/methylmethacrylate-styrene-acrylonitrile graft copolymer.

The refractive index difference between the thermoplastic resin and the rubber/ methylmethacrylate-styrene-acrylonitrile graft copolymer may be about 0.008 or less, preferably about 0.004 or less, more preferably about 0.002 or less. If the refractive index difference is more than 0.008, the haze of the transparent ABS resin obtained therefrom may increase, thereby the transparency may be deteriorated.

It is preferable that the transparent ABS resin has a haze of about 4.5 or less as measured by Nippon Denshoku Haze meter and an Izod impact strength according to ASTM D-256 with a sample thickness of 3.175 mm (1/8 inch) of about 13 kgf·cm/cm or more in various application.

In exemplary embodiments of the invention, the transparent ABS resin has a haze of about 0.1∼4.5 as measured by Nippon Denshoku Haze meter and an Izod impact strength according to ASTM D-256 with a sample thickness of 3.175mm (1/8 inch) of about 13∼35 kgf·cm/cm.

The invention may be better understood by reference to the following examples which are intended for the purpose of illustration and are not to be construed as in any way limiting the scope of the present invention, which is defined in the claims appended hereto. In the following examples, all parts and percentage are by weight unless otherwise indicated.

### Mode for the Invention

**Examples**

**Preparative Example 1**

100 parts of a monomer mixture consisting of 15 parts of styrene, 80 parts of methylmethacrylate and 5 parts of acrylonitrile, along with 15 parts of ethylbenzene, 0.03 parts of di-t-amyl peroxide and 0.2 parts of di-t-dodecyl mercaptane were mixed to form a raw material, which was then continuously fed into a stainless steel reactor having a volume of 2 L capable of controlling reaction temperature and agitation. The reactant of the reactor was maintained at 130 °C with an average residence time of 2 hours, followed by discharging the resultant continuously. The monomer conversion of the reactor was controlled to 35 %. The discharged resultant was continuously charged to a second reactor, simultaneously, 3.8 parts of styrene based on 100 parts of the monomer mixture was added to the second reactor continuously. The reactant of the second reactor was maintained at 130 °C with an average residence time of 2 hours, followed by discharging the resultant continuously. The monomer conversion of the second reactor was controlled to 35 % so that the final conversion became 70 %. The final resultant from the second reactor was introduced to a devolatilizer controlled at a temperature of 220 °C and a pressure of 27 mbar (20 torr) to remove unreacted monomers and solvent, and then pelletized using a pelletizer to obtain a thermoplastic resin in pellet form. The refractive index of the thermoplastic resin measured by using the prism coupler manufactured by Metricon Corp. was 1.513, the weight average molecular weight measured by using the gel permeation chromatography (GPC) was 98,000 and the molecular weight distribution was 2.1 and the compositions of the thermoplastic resin measured by using the Elemental Analyzer were styrene 22 %, acrylonitrile 3.5 and methylmethacrylate 74.5 %.

**Preparative Example 2**

Preparative Example 2 was prepared in the same manner as in Preparative Example 1 except that the monomer mixture consisting of 32 parts of styrene, 58 parts of methylmethacrylate and 10 parts of acrylonitrile is used, and that 6 parts of styrene was added to the second reactor. The refractive index of the thermoplastic resin was 1.533. the weight average molecular weight was 95,000, the molecular weight distribution was 2.2 and the compositions of the thermoplastic were styrene 41 %, acrylonitrile 7.5 %, and methylmethacrylate 51.5 %.

**Preparative Example 3**

Preparative Example 3 was prepared in the same manner as in Preparative Example 1 except that the monomer mixture consisting of 21 parts of styrene, 73 parts of methylmethacrylate and 6 parts of acrylonitrile was used. The refractive index of the thermoplastic resin was 1.520, the weight average molecular weight was 98,000, the molecular weight distribution was 2.2 and the compositions of the thermoplastic resin were styrene 29 %, acrylonitrile 4.2 %, and methylmethacrylate 66.8 %.

**Preparative Example 4**

100 parts of a monomer mixture consisting of 18 parts of styrene, 77 parts of methylmethacrylate and 5 parts of acrylonitrile, along with 15 parts of ethylbenzene, 0.02 parts of di-t-amyl peroxide and 0.1 parts of di-t-dodecyl mercaptane were mixed to form a raw material, which was then fed continuously into a stainless steel reactor having a volume of 2 L capable of controlling reaction temperature and agitation. The reactant of the reactor was maintained at 130 °C with an average residence time of 2 hours, followed by discharging the resultant continuously. The monomer conversion of the reactor was controlled to 70 %. The resultant was introduced to a devolatilizer controlled at a temperature of 220 °C and a pressure of 27mbar (20 torr) to remove unreacted monomers and solvent, and then pelletized using a pelletizer to obtain a thermoplastic resin in pellet form. The refractive index of the thermoplastic resin was 1.513, the weight average molecular weight was 96,000, the molecular weight distribution was 2.4 and the compositions of the thermoplastic resin were styrene 22.5 %, acrylonitrile 3.5 %, and methylmethacrylate 74 %.

**Preparative Example 5**

100 parts of a monomer mixture consisting of 22 parts of styrene, 73 parts of methylmethacrylate and 5 parts of acrylonitrile, along with 130 parts of distilled water, 0.5 parts of sodium lauryl sulfate, 0.3 parts of 2-2'-azobisisobutyronitrile were mixed to form a raw material, which was then fed into a stainless steel reactor having a volume of 10 L capable of controlling reaction temperature and agitation. The raw material was then polymerized at 75 °C for 3 hours, followed by aging for 1.5 hours at 80 °C. The resultant was coagulated by dropwise addition of 2 % aqueous sulfuric acid under stirring at 70 °C, dehydrated, washed and dried to obtain thermoplastic resin in powder form. The monomer conversion was 98.8 %. The refractive index of the thermoplastic resin obtained from the above batch process was 1.513, the weight average molecular weight was 95,000, the molecular weight distribution was 2.5 and the compositions of the thermoplastic resin were styrene 22.3 %, acrylonitrile 4.5 %, and methylmethacrylate 73.2 %.

**Preparative Example 6**

Preparative Example 6 was prepared in the same manner as in Preparative Example 1 except that the monomer mixture consisting of 16 parts of styrene, 79 parts of methylmethacrylate and 5 parts of acrylonitrile, was used. The monomer conversion of the first reactor was controlled to 50 % and that of the second reactor was controlled to 20 % so that the final conversion beccame 70 %. 3 parts of styrene was added to the second reactor. The refractive index of the thermoplastic resin was 1.513, the weight average molecular weight was 96,500, the molecular weight distribution was 2.35 and the compositions of the thermoplastic resin were styrene 22 %, acrylonitrile 3.5 %, and methylmethacrylate 74.5 %.

**Preparative Example 7**

Preparative Example 7 was prepared in the same manner as in Preparative Example 5 except that the monomer mixture consisting of 28 parts of styrene, 67 parts of methylmethacrylate and 5 parts of acrylonitrile was used. The monomer conversion was 98.5 %. The refractive index of the thermoplastic resin was 1.520, the weight average molecular weight was 96,000, the molecular weight distribution was 2.5 and the compositions of the thermoplastic were styrene 28.5 %, acrylonitrile 4.5 %, and methylmethacrylate 67 %.

**Examples and Comparative Examples**

**Example 1**

65 parts of thermoplastic resin obtained from the Preparative Example 1, 35 parts of butadiene rubber/methylmethacrylate-styrene-acrylonitrile graft copolymer having a refractive index of 1.513, 0.2 parts of IRGANOX 1076 (CIBA-GEIGY) as a thermal stabilizer and 0.1 part of ethylene bis stearamide as a lubricant were mixed and melt-extruded at a temperature of 210 °C to prepare a transparent ABS in pellet form. The transparent ABS was injection-molded into test specimens and the physical properties of the test specimens were measured. The results were shown in Table 1.

**Example 2**

Example 2 was prepared in the same manner as in Example 1 except that 65 parts of thermoplastic resin obtained from the Preparative Example 2 and 35 parts of SBR rubber/methylmethacrylate-styrene-acrylonitrile graft copolymer having a refractive index of 1.533 were used. The physical properties were shown in Table 1.

**Example 3**

Example 3 was prepared in the same manner as in Example 1 except that 65 parts of thermoplastic resin obtained from the Preparative Example 3 and 35 parts of butadiene rubber/methylmethacrylate-styrene-acrylonitrile graft copolymer having a refractive index of 1.513 were used. The physical properties were shown in Table 2.

**Comparative Example 1**

Comparative Example 1 was prepared in the same manner as in Example 1 except that 65 parts of thermoplastic resin obtained from the Preparative Example 4 and 35 parts of butadiene rubber/methylmethacrylate-styrene-acrylonitrile graft copolymer having a refractive index of 1.513 were used. The physical properties were shown in Table 1.

**Comparative Example 2**

Comparative Example 2 was prepared in the same manner as in Example 1 except that 65 parts of thermoplastic resin obtained from the Preparative Example 5 and 35 parts of butadiene rubber/methylmethacrylate-styrene-acrylonitrile graft copolymer having a refractive index of 1.513 were used. The physical properties were shown in Table 1.

**Comparative Example 3**

Comparative Example 3 was prepared in the same manner as in Example 1 except that 65 parts of thermoplastic resin obtained from the Preparative Example 6 and 35 parts of butadiene rubber/methylmethacrylate-styrene-acrylonitrile graft copolymer having a refractive index of 1.513 were used. The physical properties were shown in Table 1.

**Comparative Example 4**

Comparative Example 4 was prepared in the same manner as in Example 1 except that 65 parts of thermoplastic resin obtained from the Preparative Example 7 and 35 parts of butadiene rubber/methylmethacrylate-styrene-acrylonitrile graft copolymer having a refractive index of 1.513 were used. The physical properties were shown in Table 2.

The physical properties of the test specimens are measured in accordance with the following methods.

(1) Izod Impact Strength (kgf cm/cm, 3.175mm (1/8") The Izod impact strength is measured in accordance with ASTM D-256.

(2) Haze (%): The haze is measured by a Haze meter produced by Nippon Denshoku Co., using a 3 mm thick test sample.

Table 1

| | | Physical properties of Thermoplastic resin | | Physical properties of transparent ABS | |
|---|---|---|---|---|---|
| | | Refractive index difference to the rubber phase | molecular weight distribution | Haze | Impact Strength |
| Example | 1 | 0 | 2.1 | 1.8 | 14.5 |
| | 2 | 0 | 2.2 | 1.9 | 13.8 |
| Comparative Example | 1 | 0 | 2.4 | 2.4 | 12.2 |
| | 2 | 0 | 2.5 | 2.6 | 11.6 |
| | 3 | 0 | 2.35 | 2.3 | 12.5 |

Table 2

| | Physical properties of Thermoplastic resin | | Physical properties of transparent ABS | |
|---|---|---|---|---|
| | Refractive index difference to the rubber phase | a molecular weight distribution | Haze | Impact Strength |
| Example 3 | 0.007 | 2.2 | 4.5 | 14.1 |
| Comparative Examples 4 | 0.007 | 2.5 | 12.3 | 11.3 |

As shown in Table 1, the transparent ABS resin of Examples 1-2 in which the thermoplastic resin having uniform composition and narrow molecular weight distribution was employed as a matrix showed good transparency and impact strength. However, the transparent ABS resins of Comparative Examples 1-2 in which the thermoplastic resin having insufficient composition uniformity and broad molecular weight distribution was used as a matrix resin showed the deterioration in transparency and impact strength, although there was no refractive index difference between the thermoplastic resin and the rubber phase. This was because when the thermoplastic resin having a high conversion was prepared by a batch process or a continuous process using only one reactor, the compositions of polymer produced from the initial polymerization stage might be different from those from the last polymerization stage. Accordingly, a minute refractive index difference might partially occur, even though the average refractive indices were the same, resulting in the deterioration of transparency of ABS resin. Further, the impact resistance of the Comparative Examples was lowered, because the broad molecular weight distribution of polymers whose weight average molecular weight was similar to that of Examples might have a low number average molecular weight. Comparative Example 3 in which the monomer conversion of one reactor was more than 40 %, although there was no refractive index difference, showed poor transparency and impact strength compared to the Examples 1-2 because of the insufficient composition uniformity and the broad molecular weight distribution.

As shown in Table 2 in which the refractive index difference was 0.007, Example 3 using the thermoplastic resin with uniform composition and narrow molecular weight distribution showed better transparency and impact strength than Comparative Example 4. This was because the thermoplastic resin of the present invention had uniform compositions, so that deterioration in transparency due to the refractive index difference from the rubber phase was minimized.

The above Examples and Comparative Examples provide the evidence that the transparent ABS resin in which the thermoplastic resin prepared by the present invention was employed as a matrix resin might have good transparency and impact strength.

In the above, the present invention was described based on the specific preferred embodiments, but it should be apparent to those ordinarily skilled in the art that various changes and modifications could be added without departing from the spirit and scope of the present invention which would be defined in the appended claims.

## Claims

1. A method for preparing a thermoplastic resin, which comprises continuously polymerizing a mixed raw material comprising a (meth)acrylic acid alkylester, an aromatic vinyl monomer and a unsaturated nitrile monomer in series reactors while controlling the conversion of each reactor to be 40 % or less; wherein a monomer selected from the group consisting of (meth)acrylic acid alkylester, aromatic vinyl monomer, unsaturated nitrile monomer and mixtures thereof is further added between each reactor to uniformly maintain the composition of polymers produced from each reactor.

2. The method of Claim 1, wherein said series reactors comprise 2∼6 reactors.

3. The method of Claim 1, wherein said the conversion of each reactor is controlled through a reaction temperature, a residence time, kinds and amounts of polymerization initiator.

4. The method of Claim 1, wherein said the conversion of each reactor is controlled to be 15∼ 0 %.

5. The method of Claim 1, wherein said mixed raw material comprises up to 0.2 parts by weight of a polymerization initiator based on 100 parts by weight of a monomer mixture.

6. The method of Claim 1, wherein said mixed raw material comprises up to 20 parts by weight of a solvent based on 100 parts by weight of a monomer mixture.

7. A thermoplastic resin prepared by any one of Claims 1 to 6, having a weight average molecular weight of 60,000 to 150,000, and a molecular weight distribution of 2.3 or less.

8. The thermoplastic resin of Claim wherein said thermoplastic resin comprises 50∼85 parts by weight of (meth)acrylic acid alkylester, 10-50 parts by weight of aromatic vinyl compound and 2∼5 parts by weight of unsaturated nitrile compound.

9. A transparent ABS resin composition containing the thermoplastic resin of Claim

10. The transparent ABS resin composition of Claim 9, wherein said transparent ABS resin composition contains a rubber/methylmethacrylate-styrene-acrylonitrile graft copolymer.

11. The transparent ABS resin composition of Claim 10, wherein the refractive index, difference between the rubber/methylmethacrylate-styrene-acrylonitrile graft copolymer and the thermoplastic resin is 0∼0.008.

12. The transparent ABS resin composition of Claim 10, wherein the refractive index difference between the rubber/methylmethacrylate-styrene-acrylonitrile graft copolymer and the thermoplastic resin is 0∼0.002.

13. A transparent ABS resin composition comprising 50∼90 % by weight of the thermoplastic resin of Claim 7 and 10∼50 % by weight of a rubber/ methylmethacrylate-styrene-acrylonitrile graft copolymer, wherein said transparent ABS resin composition has a haze of 0.1∼4.5 as measured by Nippon Denshoku Haze meter and an Izod impact strength according to ASTM D-256 with a sample thickness of 3.75mm (1/8 inch) of 13∼35 kgfcm/cm.

## Patentansprüche

1. Verfahren zur Herstellung eines thermoplastischen Harzes, das das kontinuierliche Polymerisieren eines gemischten Rohmaterials, umfassend einen (Meth)acrylsäurealkylester, ein aromatisches Vinylmonomer und ein ungesättigtes Nitrilmonomer, in Reihenreaktoren unter Steuern der Umwandlung von jedem Reaktor auf 40% oder weniger, umfasst, wobei zwischen jedem Reaktor des Weiteren ein Monomer, ausgewählt aus der Gruppe, bestehend aus (Meth)acrylsäurealkylester, aromatischem Vinylmonomer, ungesättigtem Nitrilmonomer und Gemischen davon, zugesetzt wird, um die Zusammensetzung der durch jeden Reaktor hergestellten Polymere gleichzuhalten.

2. Verfahren nach Anspruch 1, wobei die Reihenreaktoren 2∼6 Reaktoren umfassen.

3. Verfahren nach Anspruch 1, wobei die Umwandlung von jedem Reaktor durch Reaktionstemperatur, Verweilzeit, Arten und Mengen von Polymerisationsinitiator gesteuert wird.

4. Verfahren nach Anspruch 1, wobei die Umwandlung von jedem Reaktor auf 15∼40% gesteuert wird.

5. Verfahren nach Anspruch 1, wobei das gemischte Rohmaterial bis zu 0,2 Gewichtsteile eines Polymerisationsinitiators auf der Basis von 100 Gewichtsteilen eines Monomergemischs umfasst.

6. Verfahren nach Anspruch 1, wobei das gemischte Rohmaterial bis zu 20 Gewichtsteile eines Lösungsmittels auf der Basis von 100 Gewichtsteilen eines Monomergemischs umfasst.

7. Thermoplastisches Harz, hergestellt durch einen der Ansprüche 1 bis 6 mit einem Gewichtsmittel des Molekulargewichts von 60.000 bis 150.000 und einer Molekulargewichtsverteilung von 2,3 oder weniger.

8. Thermoplastisches Harz nach Anspruch 7, wobei das thermoplastische Harz 50∼85 Gewichtsteile (Meth)acrylsäurealkylester, 10∼50 Gewichtsteile aromatische Vinylverbindung und 2∼15 Gewichtsteile ungesättigte Nitrilverbindung umfasst.

9. Transparente ABS-Harzzusammensetzung, enthaltend das thermoplastische Harz nach Anspruch 8.

10. Transparente ABS-Harzzusammensetzung nach Anspruch 9, wobei die transparente ABS-Harzzusammensetzung ein Kautschuk/Methylmethacrylat-Styrol-Acrylnitril-Pfropf-Copolymer enthält.

11. Transparente ABS-Harzzusammensetzung nach Anspruch 10, wobei der Brechungsindexunterschied zwischen dem Kautschuk/Methylmethacrylat-Styrol-Acrylnitril-Pfropf-Copolymer und dem thermoplastischen Harz 0-0,008 beträgt.

12. Transparente ABS-Harzzusammensetzung nach Anspruch 10, wobei der Brechungsindexunterschied zwischen dem Kautschuk/Methylmethacrylat-Styrol-Acrylnitril-Pfropf-Copolymer und dem thermoplastischen Harz 0-0,002 beträgt.

13. Transparente ABS-Harzzusammensetzung, umfassen 50∼90 Gewichts-% des thermoplastischen Harzes nach Anspruch 7 und 10∼50 Gewichts-% eines Kautschuk/Methylmethacrylat-Styrol-Acrylnitril-Pfropf-Copolymers, wobei die transparente ABS-Harzzusammensetzung eine wie durch einen Trübungsmesser des Typs Nippon Denshoku gemessene Trübung von 0,1-4,5 und eine Izod-Schlagzähigkeit gemäß ASTM D-256 mit einer Probendicke von 3,75 mm (1/8 Zoll) von 13∼35 kgf·cm/cm aufweist

## Revendications

1. Procédé de préparation d'une résine thermoplastique, qui comprend la polymérisation en continu d'un mélange de matières premières comprenant un ester alkylique de l'acide (méth)acrylique, un monomère vinylaromatique et un nitrile monomère insaturé, dans des réacteurs en série, tout en régulant le taux de conversion de chaque réacteur à 40 % ou moins, dans lequel un monomère choisi dans le groupe consistant en les esters alkyliques de l'acide (méth)acrylique, les monomères vinylaromatiques, les nitriles monomères insaturés et les mélanges de ceux-ci, est en outre ajouté entre chaque réacteur, pour maintenir uniformément la composition des polymères produits dans chaque réacteur.

2. Procédé selon la revendication 1, dans lequel lesdits réacteurs en série comprennent 2 à 6 réacteurs.

3. Procédé selon la revendication 1, dans lequel ledit taux de conversion de chaque réacteur est régulé par la température de réaction, le temps de séjour, la nature et la quantité de l'amorceur de polymérisation.

4. Procédé selon la revendication 1, dans lequel ledit taux de conversion de chaque réacteur est régulé à une valeur de 15 à 40 %.

5. Procédé selon la revendication 1, dans lequel ledit mélange de matières premières comprend jusqu'à 0,2 parties en poids d'un amorceur de polymérisation pour 100 parties en poids du mélange de monomères.

6. Procédé selon la revendication 1, dans lequel ledit mélange de matières premières comprend jusqu'à 20 parties en poids d'un solvant pour 100 parties en poids du mélange de monomères.

7. Résine thermoplastique préparée selon l'une quelconque des revendications 1 à 6, ayant une masse moléculaire moyenne en masse de 60 000 à 150 000 et une distribution des masses moléculaires de 2,3 ou moins.

8. Résine thermoplastique selon la revendication 7, ladite résine thermoplastique comprenant 50 à 85 parties en poids d'un ester alkylique de l'acide (méth)acrylique, 10 à 50 parties en poids d'un composé vinylaromatique et 2 à 15 parties en poids d'un composé nitrile insaturé.

9. Composition de résine ABS transparente contenant la résine thermoplastique de la revendication 8.

10. Composition de résine ABS transparente selon la revendication 9, ladite composition de résine ABS transparente comprenant un copolymère greffé caoutchouc/ méthacrylate de méthyle-styrène-acrylonitrile.

11. Composition de résine ABS transparente selon la revendication 10, dans lequel la différence d'indice de réfraction entre le copolymère greffé caoutchouc/ méthacrylate de méthyle-styrène-acrylonitrile et la résine thermoplastique est d'environ 0 à 0,008.

12. Composition de résine ABS transparente selon la revendication 10, dans laquelle la différence d'indice de réfraction entre le copolymère greffé caoutchouc/ méthacrylate de méthyle-styrène-acrylonitrile et la résine thermoplastique est de 0 à 0,002.

13. Composition de résine ABS transparente comprenant 50 à 90 % en poids de la résine thermoplastique de la revendication 7 et 10 à 50 % en poids d'un copolymère greffé caoutchouc/méthacrylate de méthyle-styrène-acrylonitrile, ladite composition de résine ABS transparente ayant un trouble de 0,1 à 4,5, tel que mesuré par l'appareil de mesure Nippon Denshoku Haze meter, et une résistance aux chocs Izod selon ASTM D-256, avec une épaisseur d'éprouvette de 3,75 mm, de 13 à 35 kgf cm/cm.
